(19)

Europäisches
Patentamt
European
Patent Office
Office européen
des brevets

(11) **EP 3 355 279 A1**

(12) **EUROPEAN PATENT APPLICATION**

(43) Date of publication:
01.08.2018 Bulletin 2018/31

(51) Int Cl.:
*G06T 19/00* (2011.01)    *G06T 7/00* (2017.01)

(21) Application number: 17153788.9

(22) Date of filing: 30.01.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **3D Repo Ltd**
**London W2 6LG (GB)**

(72) Inventors:
• **DOBOS, Jozef**
**London W2 6LG (GB)**
• **SCULLY, Timothy Richard**
**London W2 6LG (GB)**
• **FAN, Carmen**
**London W2 6LG (GB)**

(74) Representative: **J A Kemp**
**14 South Square**
**Gray's Inn**
**London WC1R 5JJ (GB)**

(54) **METHOD AND COMPUTER PROGRAMS FOR IDENTIFYING DIFFERENCES BETWEEN 3-DIMENSIONAL SCENES**

(57)    An aim of the present invention is to compute accurate and consistent visual differences between two 3D scenes in real-time. To achieve this, the present invention renders metrics about objects in the scenes to be compared into screen-space and computes a pixel-by-pixel difference between the scenes. The metrics can include such things as color, depth, texture coordinates, etc. Once the difference is computed, various visualization techniques that highlight the changes to the user can be used.

EP 3 355 279 A1

**Description**

The present invention relates to three-dimensional modeling of complex objects, and in particular to the detection of differences between different scenes or different versions of a scene.

Being able to reliably establish what has changed between two revisions of the same 3D scene, or even between two entirely different 3D scenes, has numerous applications across various industries. These range from Architecture, Engineering and Construction (AEC) through to games development and medical imaging. For example, Computer Aided Design (CAD) and Building Information Modeling (BIM) rely heavily on 3D models that change over time as the designs evolve. The myriad of editing tools and ever growing collaborative teams make it extremely difficult to keep track of frequent changes in 3D space. Despite being the norm in software development, version control and change detection are not prevalent in 3D modeling workflows even when the design teams are all utilizing the same authoring toolset.

Some applications, such as Autodesk Maya® or VisTrails [Non-Patent Reference 1], provide change detection by recording all modeling operations performed by the user. However, if this ability is not provided by the application, or the model is edited across multiple applications, then this particular method will not be available. In such a case, the user has to resort to other detection methods that are generally slow and can lead to inaccurate results. As an example of this, in an industrial setting, different parties may use their own specialist tools to work on the same model. Interchanging data between these can result in a loss of information due to incompatibilities between different proprietary file formats. By using a tool to identify changes, problems can easily be identified.

A manual approach to 3D change detection is to visually inspect different models by superimposing them. Each model is assigned a different color to assist the user in the identifying differences. However, this method is reliant on the user's ability to distinguish those sections that overlap from those that do not. What is more, superimposing interrelated 3D models is heavily prone to z-fighting, i.e. flickering artefacts due to GPU rendering multiple co-located surfaces simultaneously.

One method of detecting 3D changes between two models is by using corresponding object IDs between different versions of the same model. An object is assigned a unique ID at creation, it will then keep this ID throughout its lifetime between different versions of the same model. By looking at which IDs are present in two models being compared, it can be detected if an object has been added, removed or preserved. The advantage is that even if the geometric changes occur to the object, its correspondence in both models can still be established. An interactive *3D Diff* tool using this method, was first proposed by Dobos and Steed [Non-Patent Reference 2]. This assumed component-level correspondence based on matching universally unique identifiers (UUIDs) provided by a domain-specific version control system, developed by the same authors. The full system has been extensively described in [Non-Patent Reference 3], most notably the different visualization modes such as *superposition*, *juxtaposition*, and *explicit encodings*, which effectively describe overlay, side-by-side rendering and differences only visualizations respectively, as well as *two-*, *three-* and *n-way* differencing. Similarly, long established commercial solutions such as *Detect IFC Model Changes* tool in ArchiCAD® by Graphisoft and *IFC Change Management* in Tekla® by Trimble rely on object-level IDs being preserved between consecutive revisions of IFC files. Equivalent tools exist in cost estimating packages such as Vico Office™ by Trimble in 3D and CostX® by Exactal in 2D. However, these tools rely heavily on IDs being preserved, something which is not guaranteed when interchanging models between different applications and sometimes the same application. Methods do exist for calculating the correspondence a posteriori, but they are slow to compute and not necessarily reliable.

Other methods rely on implicit correspondence by subdividing the space into 3D voxels, i.e. equal sized cubes within a regular grid. Two voxels that share the same $(x,y,z)$ coordinates are implicitly correspondent assuming the input models occupy the same volume. For instance, *Ngrain®* 3D *Geometric Differencing* (http://www.ngrain.com/ngrain-and-3d-geometric-differencing/) performs voxelization of the rendering volume which can be slow and memory consuming. Similar methods based on point-clouds are also employed in industrial 3D laser scanning by Leica Geosystems® and Faro® among others.

There also exist methods that try to establish correspondence across models simply from geometry without the reliance on preserved editing histories or IDs, e.g. [Non-Patent Reference 4] or [Non-Patent Reference 5]. Yet, they still present the results either on a per-component, per-triangle or per-vertex basis. For example, the source code hosting website, GitHub®, provides a basic *3D File Diff* visualization for STereoLithography (STL) file comparison. This is achieved by using Constructive Solid Geometry (CSG) to perform operations akin to mathematical set operations to compute intersections, and differences. Their viewer offers two modes of operation; one showing additions and deletions in green and red, and another using a slider to allow the user to blend between the models. A similar slider interface was also employed by [Non-Patent Reference 6] to swap parts of models in order to generate novel shapes as well as in [Non-Patent Reference 7] to interpolate component changes between consecutive model revisions.

However, these methods will not always provide accurate correspondence, and due to their computational complexity, they do not scale well to large industrial applications where 3D models often consist of hundreds of thousands of components and millions of polygons. Furthermore, these methods are only able to detect modifications down to individual entity level and are unable to identify differences in actual surface features.

[Non-Patent Reference 8] describes an error metric based on depth buffer comparison. By rendering 3D models from various viewpoints, the average depth error is calculated for purposes such as model compression.

SUMMARY

A robust 3D differencing method that is file-format-independent and supports all sorts of modeling scenarios and editing tools is therefore desirable. In particular, a 3D differencing method that fulfils at least some of the following criteria is desirable:

- It should be consistent and accurate
- It should work across different tools regardless of their specific data representations or file formats
- It should fit seamlessly into the existing editing pipelines
- It should scale to large datasets without significant computational overhead

According to the present invention, there is provided a method of detecting differences between a first 3D scene and a second 3D scene, the method comprising:

aligning the first and second 3D scenes to each other;
determining a set of view settings;
rendering first and second source images of the first and second 3D scenes respectively using the view settings, each of the source images comprising a 2D array of pixels and each of the pixels comprising a display value and an auxiliary value;
comparing the auxiliary values of corresponding pixels of the first and second source images to detect differences between the first and second 3D scenes.

The present invention provides an interactive method for fast and reliable visual differencing of 3D scenes by performing the comparison in screen-space. The present invention is based on the idea that if two objects project onto the same screen-space with identical properties (e.g. one or more of depth, color, normal, UV, texture, etc.) they can be assumed to be identical; otherwise, they are different. The use of screen-space means that the computational complexity scales with rendering resolution, and fidelity of results is unaffected by the zoom level. This is in contrast to previous works which require large computational effort in 3D space to visualize the same results. Particular advantages can be achieved using graphics hardware to perform the differencing in parallel. The present invention is applicable to previously intractable situations such as large-scale industrial 3D scenes, typically spanning hundreds of thousands of separate components.

The present invention will be described further below with reference to exemplary embodiments and the accompanying drawings, in which:

Figure 1 depicts (a) two input models and the result of a differencing process according to an embodiment of the invention, displayed as (b) a point cloud, (c) a wireframe, (d) a shaded wireframe and (e) a shaded only rendering;
Figure 2 depicts the processing pipeline of a differencing process according to an embodiment of the invention;
Figure 3 depicts pre-aligned scenes *A and B* rendered using the same settings in order to produce a number of independent screen space images for each of the inputs;
Figure 4 depicts an example of: Depth differencing in which linearized depth values in *A* are subtracted from those in *B*;
Figure 5 is a graph depicting depth buffer precision for $n$=1 and $f$=100;
Figure 6 depicts linearized z-buffer differencing as a unit cube;
Figure 7 depicts diffuse color differencing between two scenes;
Figure 8 is a diagram explaining spherical angles used in an embodiment of the invention;
Figure 9 depicts the main user interface of a computer program embodying the method of the invention;
Figure 10 depicts an extension of the embodiment of the invention to detect simple clashes;
Figure 11 depicts a comparison between versions of a model of a road bridge using an embodiment of the invention;
Figure 12 depicts a variant embodiment of the present invention which employs multi-camera rendering; and

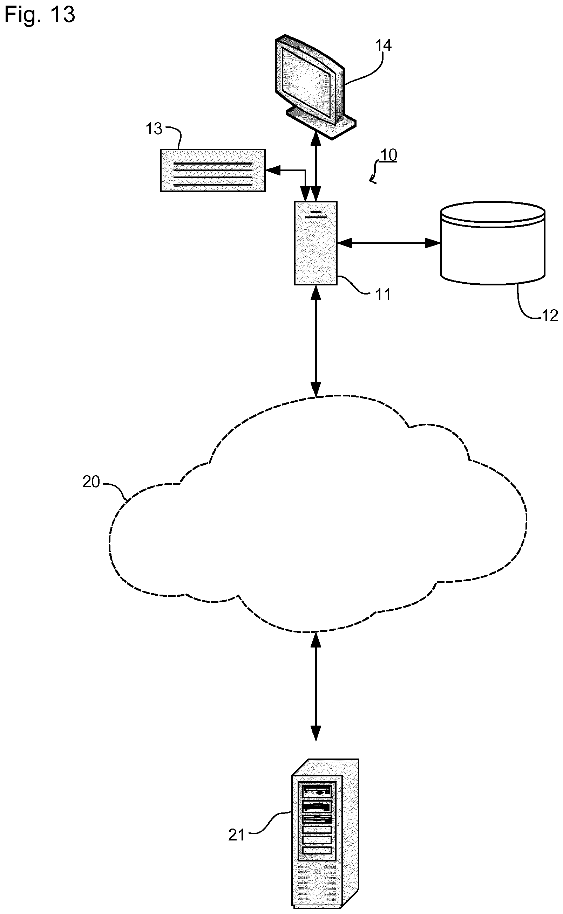

Figure 13 depicts apparatus according to an embodiment of the present invention.

An embodiment of the invention provides a method of differencing which can fulfil the abovementioned requirements and is referred to herein as the *Screen Space 3D Diff* method. The *Screen Space 3D Diff* method makes no assumptions about the rendering or underlying data representations. Unlike existing methods, the *Screen Space 3D Diff* method is based on screen space differencing which is fast, reliable, independent of scene complexity and easy to implement. It also provides pixel-level accuracy at any magnification level.

The *Screen Space 3D Diff* method provides various advantages, including:

1. A novel, fast and reliable method for real-time visual 3D differencing
2. The addition of multi-modal fusion based on differences in colors, textures, normals, etc.
3. CPU as well as GPU-based implementations
4. Utility in everyday CAD and BIM workflow
6. Applications across a wide variety of industries including architecture, aerospace, automotive, etc.

The method of the present invention requires neither matching identifiers nor any prior knowledge of the revisions made in the models to be compared and runs in real-time, unlike any of the aforementioned solutions.

The method of the present invention of depth-based 3D differencing is akin to implicit on-the-fly voxelization of the surface layer from the current camera view only. This significantly reduces computational complexity and memory footprint which makes it suitable for real-time rendering. It also increases the perceived precision of the differencing as the implicit comparison volume is always equal to the current pixel size. In other words, the users enjoy seamless pixel-perfect representation of the differences in the final rendering at all times. The present invention primarily aims to identify low-level visual and geometrical differences and to explicitly distinguish visual disparities. Once discovered, these changes can then be relayed to the user either visually or as a list of modified component-level IDs.

## Method Overview

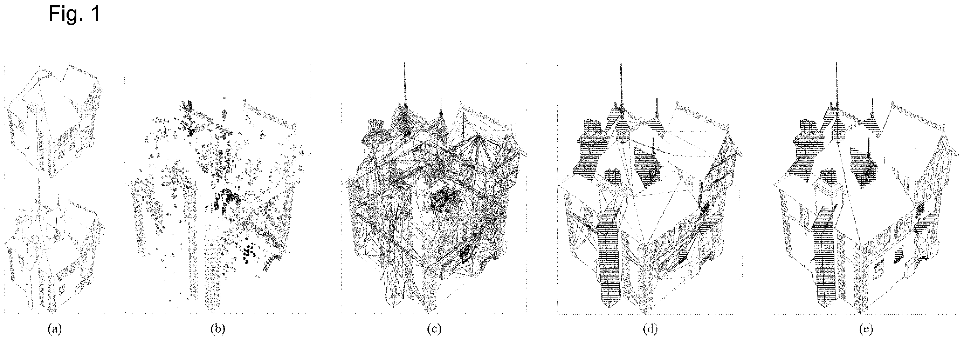

An aim of the present invention is to compute accurate and consistent visual differences between two 3D scenes in real-time. To achieve this, the present invention renders metrics about objects in the scenes to be compared into screen-space and computes a pixel-by-pixel difference between the scenes. The metrics can include such things as color, depth, texture coordinates, etc. Once the difference is computed, various visualization techniques that highlight the changes to the user can be utilized, as illustrated in Figure 1 for example. In Figure 1, cross-hatching corresponds to features being *added* while horizontal hatching corresponds to features being *deleted.* In an implementation of the invention color can be used to indicate changes, e.g. green for addition and red for deletion. It can be seen that the *Screen Space 3D Diff* method correctly identifies differences in geometry, triangulation, vertices and even surface features down to individual pixels beyond simple object-level detection of differences. Any other rendering and shading is equally possible. To ensure that unchanged objects between the two scenes correspond in screen-space, a set of alignment steps is first performed. Afterwards, all other steps can be implemented on a GPU and therefore provide real-time results for the user.

## Processing Pipeline

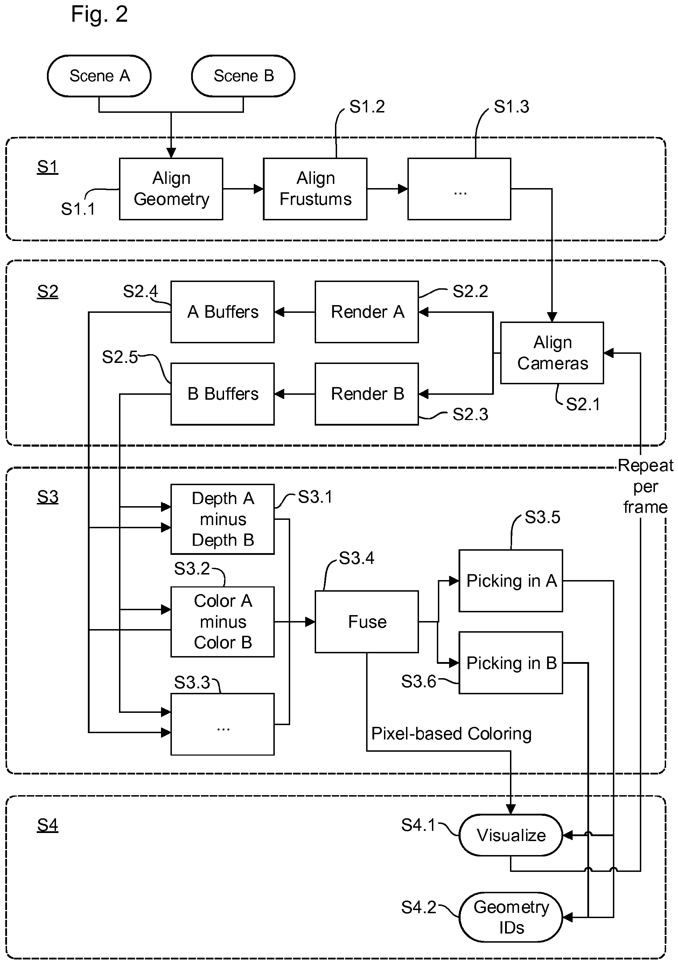

The processing pipeline of the *Screen Space 3D Diff* method is depicted in Figure 2. Two input scenes A and B are firstly pre-aligned S1 such that their geometry matches in 3D space and thus their projection frustums match. Next, different properties of the scenes are rendered S2 into a series of buffers for comparison, which can range from depth to color to picking. These are then processed in order to determine the differences S3 between them in both scenes. Finally, the results are fused, as described later, and visualized S4. Using the picking buffers, the differences from the screen space can also be related back to the geometry IDs. The rendering loop is then repeated on each frame based on user navigation.

In more detail, the sequence of processing steps of the *Screen Space 3D Diff* method are as follows:

**1. Input.** Input to the processing pipeline are two 3D scenes A and B which are usually revisions of the same modeling sequence where meaningful differences can be found. If two unrelated scenes are presented, the system still works as desired, albeit the results might not necessarily convey an immediately obvious high-level semantic meaning.

**2. Pre-alignment S1.** Since the method of the present invention is based on screen space comparison of otherwise independent renderings, a few crucial requirements have to be met prior to differencing. The scenes need to be aligned in the same coordinate space so that their geometry can be reliably compared. These settings are part of the pre-processing as so they need only be set once before the differencing commences.

**3. Synchronized rendering S2.** To allow the user to explore the differences, during navigation both cameras are controlled simultaneously ensuring correspondence. As is typical, the scenes are then projected into 2D *screen space* using techniques such that individual pixels correspond to values such as depth, color, normals, picking buffer values, etc. Virtually, any numerical per-pixel readings that can be obtained from a 3D rendering API can be used as part of the differencing with a varying level of contribution, as described further below.

It is not necessary that the rendering processes for the two scenes are temporally synchronized. The rendering process can be performed simultaneously or sequentially as long as the alignment of the cameras and rendering settings is preserved.

**4. Screen space differencing S3.** Once the rendering has finished, the *Screen Space 3D Diff* method then iterates through the obtained image space renderings in order to calculate their differences S3.1, S3.2, S3.3. All differences belonging to the same screen space location are then collated together during a process referred to herein as *multi-modal fusion* S3.4 in order to determine high-level semantic explanation of the changes.

**5. Output S4.** Finally, the results are used to color S4.1 the original rendered scenes in order to highlight the differences and to convey whether they came from input scene A or B. In addition, using standard false color picking procedure, the method can identify S4.2 actual geometry IDs that are different between the two scenes in the current frame. To ensure interactivity, steps 3 to 5 are repeated whenever a redraw is required, e.g. during user-driven navigation.

### Input

The inputs to the *Screen Space 3D Diff* method are two independent 3D models namely, *A* and *B*. In the present document, the term "3D model" is intended to include any shape in virtual three dimensional space which consists of one or more point clouds, lines, polygons, meshes or higher order surfaces. The *Screen Space 3D Diff* method makes no assumptions about the underlying data representations or scene graph structures. Therefore, the *Screen Space 3D Diff* method can use a "polygon soup", i.e. an unstructured group of polygons, just as readily as a highly-structured gaming model as long as it can be visualized using standard rendering techniques. In addition, 3D scenes can be used, which consist of a collection of either 3D objects or other scenes. Typically, these are represented as nodes in a scene graph; a tree-like structure where the connections between nodes represent the relative transformations between them.

The *Screen Space 3D Diff* method does not require the input models to be stored in any particular format and each can be stored in one or more separate files and representations.

### Pre-alignment

In the *Screen Space 3D Diff* method, it is desirable to ensure that: i) the input scenes are aligned in the same coordinate system S1.1; and ii) their rendering S1.2 and viewing S1.3 parameters are identical. The former assures that geometry occupying the same volume in space should, under most circumstances, correspond to the same section of the overall scene, with some limitations discussed below. The latter assures that the same portions of the scenes are visible under the same conditions.

In some cases, e.g. when differencing interrelated models such as revisions of the same modeling sequence, it can be assumed that they are already pre-aligned as required. However, there are special cases where such an assumption might not apply. Any suitable method for alignment can be used, for example methods based on symmetry and variations of the iterative closest point (ICP) algorithm for non-rigid alignment. A particularly suitable method is 4-point congruent sets algorithm (Aiger, D., Mitra, N. J., and Cohen-Or, D. 2008. 4-points congruent sets for robust pairwise surface registration. ACM Trans. Graph. 27, 3 (Aug.), 85:1-85:10), which is incorporated herein by reference, because they are fast to compute and also very reliable.

### Synchronized Rendering

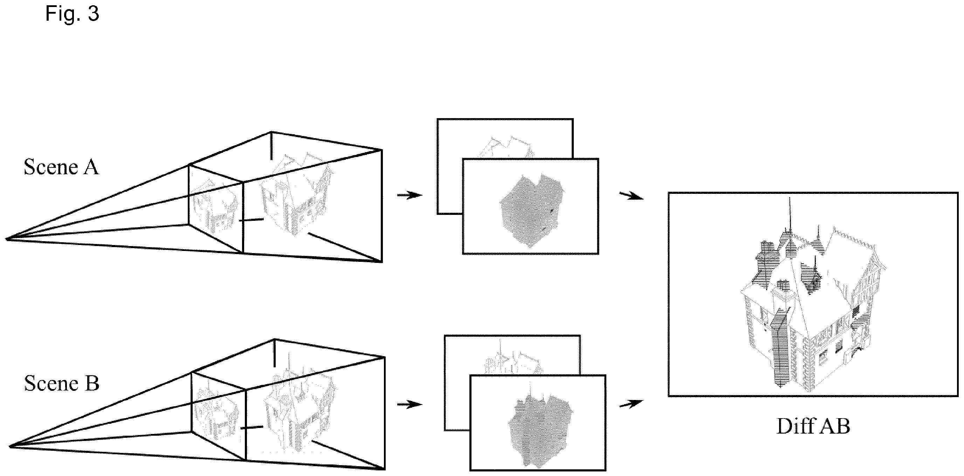

In order to obtain renderings that are directly comparable and, therefore, can be differenced in the same screen space, all rendering settings for the input scenes are synchronized as depicted in Figure 3. Regardless of the selected rendering technique, the *ModelView* and *Projection* matrices need to be identical. This includes the respective cameras' *position*, *orientation*, *direction*, *field of view*, *aspect ratio* of the viewport to the window as well as the *minimum* and *maximum viewing distances.*

As shown in Figure 3, pre-aligned scenes *A and B* are rendered using the same settings in order to produce a number of independent source images for each of the inputs. Corresponding source images are then differenced and fused together to produce the final result. Note that the same process applies to both perspective and orthographic projection equally.

To align the viewing frustums in *A and B* under the same camera settings S2.1, the union of their bounds is found as:

$$n = min(n_A, n_B)$$
$$f = max(f_A, f_B) \qquad (1)$$

where $n_A, n_B$ represent the *near* and $f_A, f_B$ the *far* clipping plane distances along the camera z-axis in *A* and *B* respectively.

If the frustum is to be set directly instead, then the *left*, *right*, *top* and *bottom* distances need to be the same depending on the rendering API and camera model being employed. Without these, the screen space readings would not correspond to the same geometry in space. If, for instance, the frustums were set independently based on the dimensions of their respective bounding boxes, as it is often the case in 3D rendering, but one of the scenes had a different size to the other, then the depth buffer would result in inconsistent readings even for the same point in space. In practice, the entire *clip space* should be identical in order to obtain renderings that will not yield false positives. This means that all settings prior to rasterization into the window coordinates are desirably matched for both scenes as they are likely to affect all or at least some of the screen space modalities that will be used for differencing.

Once the input scenes have been properly aligned, it is then possible to compute their differences in screen space. The first step is to render the same metric for both scenes separately S2.2, S2.3. In this embodiment, several key metrics, namely *depth*, *color*, *texture*, *normal*, and *metadata* are used. The rendered metrics are then stored S2.4, S2.5 in respective buffers. However, the method of the present invention can utilize any conceivable metric or a function based on one or more metrics. Once the chosen metrics have been computed in both *A* and *B*, the distance between them is calculated S3.1. The final step is to visualize these distances to make it easy for the user to comprehend.

In this embodiment, the depth difference is chosen as the primary basis of the comparison. This choice is based on the presumption that the same object is being detected at corresponding pixels in *A and B* if their depth values match. After it has been determined that the object is the same, whether its properties such as color S3.2 or texture S3.3 have changed is investigated. If the depth is different, then there is a definite change and no further comparison is necessary. Therefore, a hierarchy of differences with depth at the top and all others as its children is defined. As depth has a special precedence in the algorithm of this embodiment, it is described in detail below.

For all other metrics, in general, a similar set of procedures is used to compute their difference. Assuming that each frame is rendered in *red*, *green blue and alpha (RGBA)* space, there are four channels of information to work with. Each metric is therefore akin to an n-dimensional vector field where $n \leq 4$. To find the distance between corresponding pixels in the rendered images *A* and *B*, we compute the Euclidean distance between the vectors,

$$\Delta \mathcal{M}_{AB} = \left\| \overrightarrow{\mathcal{M}_A} - \overrightarrow{\mathcal{M}_B} \right\| = \sqrt{\sum_{i=1}^{n} (\mathcal{M}_A^i - \mathcal{M}_B^i)^2}, \; n \leq 4, \qquad (2)$$

where

$$\overrightarrow{\mathcal{M}_A}$$

and

$$\overrightarrow{\mathcal{M}_B}$$

are the corresponding vectors in A and B respectively and

$$\Delta \mathcal{M}_{AB}$$

is their difference.

Once the distance for every corresponding pixel has been computed, a semantic meaning is assigned to each,

$$\Delta \mathcal{M}_{AB} := \begin{cases} added, & if \; \overrightarrow{\mathcal{M}_A} = \emptyset \wedge \overrightarrow{\mathcal{M}_B} \neq \emptyset \\ deleted, & if \; \overrightarrow{\mathcal{M}_A} \neq \emptyset \wedge \overrightarrow{\mathcal{M}_B} = \emptyset \\ modified, \; if \; \overrightarrow{\mathcal{M}_A} \neq \emptyset \wedge \overrightarrow{\mathcal{M}_B} = \emptyset \wedge \left\| \overrightarrow{\mathcal{M}_A} - \overrightarrow{\mathcal{M}_B} \right\| > \varepsilon \\ unmodified, & otherwise, \end{cases} \qquad (3)$$

where Ø denotes an undefined vector, i.e. value not present, and ε a small positive threshold.

In assigning meaning for the current camera view, it is only necessary to process the visible projection into the 2D screen space instead of all objects within a potentially vast 3D scene. In addition, unlike in *frustum* or *small feature culling* which reduce the rendering load at the 3D level only, in each frame the present embodiment takes into account only the visible pixels and not the actual 3D objects. This makes the present embodiment computationally more efficient than component-based differencing techniques on large 3D scenes.

**Depth Difference**

Embodiments of the present invention can use the depth buffer, also known as the z-buffer, as a 2.5D height field approximation of 3D geometry. This significantly reduces the computational overhead of the method of the present invention. In addition, no explicit object-level correspondence is required. Instead, it is implicitly assumed based on the screen space co-location. Depth buffer, also known as z-buffer, represents a rasterized depth of the scene within the viewing frustum. In an embodiment it is expressed in values ranging from 0 at the near plane to 1 at the far plane, it is also possible to use a range of -1 to 1. In the present invention, the *signed* depth difference on a per-pixel basis is used to assign semantically valid high-level meaning of surface-level *addition* and *deletion* to individual scene features. Intuitively, it can be inferred that if the distance to the camera is larger in the first scene than in the second scene, new parts must have come into the view, hence, they can be labelled as added. Conversely, if the distance to the camera is smaller, some parts must have been omitted, hence deleted. Note, however, that the same geometrical changes can be also achieved by simply repositioning existing objects instead of actual addition or deletion as further discussed below.

In an embodiment, the depth difference is calculated for all pixels in the 2D scenes. However, it is possible to restrict the comparison to a region of the scenes, e.g. by user choice or by pre-defined stencil buffer. In some cases, it may be desirable to perform a comparison on only a sample of the pixels, e.g. in a preview mode. In some cases, it may be desirable to perform the comparison based on an average of adjacent pixels, e.g. if the output is only required at a lower resolution than the source images.

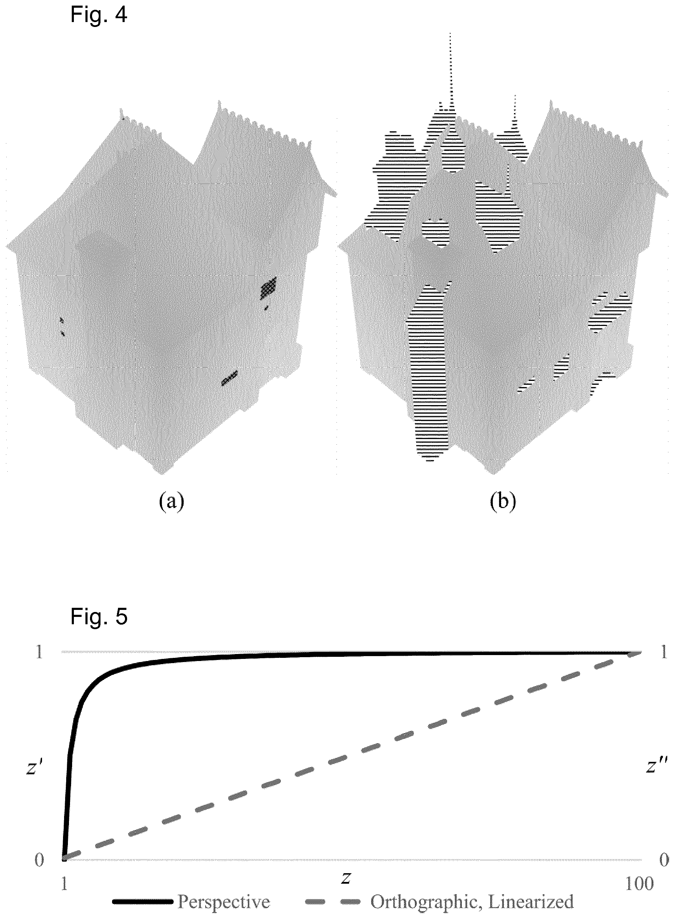

Figure 4 depicts an example of this process of depth differencing. Linearized depth values in *A* are subtracted from those in *B*. The results are highlighted (a) in cross-hatching denoting deletion in *A* and (b) in horizontal hatching denoting additions in B depending on whether the subtraction yields a negative or a positive result.

**Orthographic vs perspective projection**

There are two types of projection available in standard graphics APIs, namely perspective and orthographic. In perspective projection, this mapping is:

$$z' = \frac{f+n}{2(f-n)} + \frac{1}{z}\left(\frac{-fn}{f-n}\right) + \frac{1}{2}, \tag{4}$$

where z is the original z-ordinate of an object in the scene and *n* and *f* denote the near and far planes.

Unlike in orthographic projection, this leads to a non-linear mapping which results in significant skewing of the projected resolution as demonstrated in solid in Figure 5. Figure 5 depicts depth buffer precision for *n*=1 and *f*=100. Z-coordinates in the world space are mapped onto the screen space in perspective (solid) and orthographic (dash) projections. To be able to compute accurate depth differences, the depth values must first be linearized. If they are not linearized as the scene is rendered, it can lead to visual artefacts, notably z-fighting, caused by overlapping objects having the same depth value. Nevertheless, for the purposes of *Screen Space 3D Diff* method, it is sufficient for the linearization to be performed on values after they have been read from the depth buffer. Each perspective projected depth value z' is linearized using:

$$z'' = \frac{2n}{f+n-(2z'-1)(f-n)}. \tag{5}$$

This makes the perspective depth linearly spaced across the whole range just like in orthographic projection as shown in solid in Figure 5.

As a consequence, it ensures that the distance between two corresponding projected points in screen space is camera invariant as required. Other approaches such as reverse floating point and logarithmic depth buffers, c.f. (Cozzi, P. Andring, K. 2011. 3D Engine Design for Virtual Globes, 1st ed. CRCPress. http://www.virtualglobebook.com, which document is incorporated by reference), that also address the loss of depth-buffer resolution can be used. However, only the consistency of relative depth distances, and not necessarily the mitigation of rendering artefacts, is required in the present invention.

**Semantic assignment**

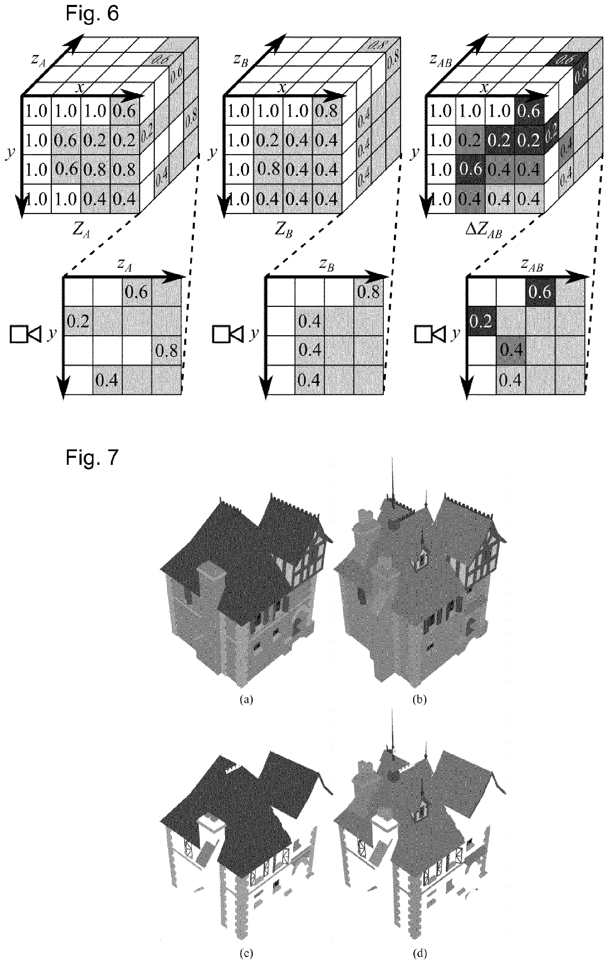

As shown in Figure 6, once consistent depth values have been obtained either through a linearization process or directly as a result of an orthographic projection, we can then assign consistent semantic meaning to all $(z_A, z_B)$ corresponding ordered pairs. Figure 6 shows linearized z-buffer differencing as a unit cube. In the top row, depth changes in $Z_A$ and $Z_B$ are calculated in $(x,y)$ screen space and visualized in $\Delta Z_{AB}$ as black text on medium grey background for additions and white text on dark grey background for deletions. In the bottom row, cross sections of the cube show the relative z-distances as measured from the camera.

Despite being able to consider the z-depth as a one-dimensional vector, there is no such thing as an undefined depth in 3D rendering. Even if all depths at z=1 were treated as "no object present" and thus undefined, those would still not be suitable for change detection. This is because relative depth differences between foreground and background objects are always view dependent. Hence, the semantic assignment from Eq. (3) has to be adapted to utilize the signed depth difference as,

$$\Delta Z_{AB} := \begin{cases} added, & if\ \left(z_A^{"} - z_B^{"}\right) > 0 \\ deleted, & if\ \left(z_A^{"} - z_B^{"}\right) > 0 \\ unmodified, & otherwise. \end{cases} \tag{6}$$

If the subtraction equals to zero, no reliable geometric difference can be detected using this metric alone. Thus, it is marked as *unmodified* in the depth space only as there still might be changes in other metrics such as color, normal, etc.

**Color Difference**

Apart from geometric difference, there are many other types of possible changes in 3D scenes that may affect their visual appearance. Even though material properties and colors have profound effects on the final rendering, humans are not necessarily good at detecting small variations in potentially a large group of similar colors. What is more, users might be only interested in some but not all such changes depending on their specific requirements.

For example, in Figure 7, an artist or a game set designer might be concerned about the roof changing color from dark green to dark pink, yet they might not care about a subtle change from lighter to darker sand color in the corner stones. Thus, it is important to take into account also the perceptual differences and the need to filter out those changes that might be less relevant. This is necessary especially in vast scenes where there might be too many color variations for a user to comprehend. In Figure 7, unlit, unshaded and untextured diffuse color values in (a) are subtracted from those in (b). The differences are left in (c) and (d) in their original coloring while the rest of the scene is suppressed in greyscale.

**Diffuse color**

For ease of discussion, first differencing in the diffuse color only is considered as other material parameters can be constructed in a similar way. Alpha transparency is treated separately due to potential blending with background objects which makes it view dependent, see below for details.

In order to segregate the respective color channels from other aspects of the scene, they are retrieved before shading is applied, i.e. without any lighting effects, just like in a picking buffer but in true rather than false color. This is because during rasterization, any per-vertex attributes are interpolated across the fragments which means that even the slightest change in triangulation could result in color inconsistencies along the surface, even if it was rendered under the same lighting conditions. Such inconsistencies would in turn cause banding artefacts throughout differencing due to rounding errors and therefore loss of numerical precision in the color buffer. Thus, the input here are two pre-aligned unlit, unshaded and untextured diffuse color buffers for *A and B* respectively as shown in Figure 7 (a) and (b).

Importantly, such buffers can be represented in a multitude of color spaces. To establish numerical equality as a binary relation only, then Euclidean distance in any suitable color space such as standard *red, green and blue (RGB)*, *hue, saturation and value (HSV)* or *hue, saturation and lightness (HSL)* can be used. The pixel values used to denote the color to be displayed can be referred to as display values, whatever color space is used. For display on a display device such as an LED screen three values per pixel are usually sufficient, however if output in hardcopy is intended additional values per pixel might be specified, e.g. CMYK. In general, HSV is better at reducing undesired interaction between brightness and saturation over HSL. However, such color spaces are device dependent and due to their linearity they do not necessarily reflect the human visual system. In contrast, the CIELAB and CIELUV color spaces defined by the *International Commission on Illumination* attempt to provide improved perceptual uniformity across the tonal range. For example, there are those colors-known as metamers-that appear to be perceptually identical, although their spectral power distributions, i.e. the proportion of them emitted lights, are clearly not the same (Schanda, J. 2007. Colorimetry: understanding the CIE system. John Wiley & Sons. which document is hereby incorporated by reference).

Hence, to take into account also the perceptual differences between the colors, we define $\Delta C_{AB}$ based on the original CIELAB color-difference formula (McLaren, K. 1976. Xiii - the development of the CIE 1976 (L*a*b*) uniform color space and color-difference formula. Journal of the Society of Dyers and Colourists 92, 9, 338-341 which document is hereby incorporated by reference) of:

$$\Delta E_{AB}^* = \ \|(L_A^*, a_A^*, b_A^*) - (L_B^*, a_B^*, b_B^*)\|, \tag{7}$$

where *L\** corresponds to the lightness of the color, *a\** its position between the red and green, and *b\** between the yellow and blue values in the L*a*b* color space.

It is also possible to use formulas that address perceptual non-uniformities, e.g. (Sharma, G., Wu, W., and Dalal, E. N. 2005. The CIEDE2000 color-difference formula: Implementation notes, supplementary test data, and mathematical observations. Color Research & Application 30, 1, 21-30, which document is hereby incorporated by reference). However, where processing speed is more important than the most accurate color rendition, Eq. (7) is advantageous.

**Semantic assignment**

Regardless of the chosen color space representation, we can assign a consistent semantic meaning to * all $(c_A,c_B)$ corresponding ordered pairs based on Eq. (3). For $\Delta C_{AB}=\Delta E^*_{AB}$, the value of $\varepsilon\approx2.3$ is in experimental psychology known as just-noticeable difference (Sharma, G. Andbala, R. 2002. Digital color imaging handbook. CRC press. ISBN0-8493-0900-X). Color differences below this threshold are effectively unperceivable by human visual system, in an embodiment, difference smaller than this threshold are labelled as *unmodified.* Alternatively, the threshold could be set by the user, e.g. using a sliding scale. Similarly, it is possible to visualize the "rate of change" between all pairs of colors as a heat map of $\Delta C_{AB}$ across the whole scene.

**Texture Difference**

Adding textures to objects in a scene is another example of popular non-geometric enhancement that provides visual detail without affecting the scene complexity. Texture mapping parametrizes 2D source images into their own abstract coordinate system in order to map them onto 3D surfaces. This process transforms pixels from image space into texels, i.e. texture elements, in object space since such a mapping is not necessarily one-to-one due to filtering, mipmapping, etc. Although in computer graphics a color change in a texel can be attributed to many different reasons, ultimately it is either due to a change in the source image, its mapping onto the 3D surface or both. Nevertheless, simultaneous changes in source images and their mappings can cancel each other out. For instance, shifting a repeated pattern image as well as its texture coordinates by exactly one period in opposite directions would result in the 3D rendering looking unmodified. Yet, the user might want to be notified of such hidden modifications despite the lack of apparent visual change. Thus, it is undesirable to compare texture maps only in 2D based on their source images or only in 3D based on their color effects across visible surfaces. Instead, it is desirable to compare for changes in both color and parameter space. The same also applies to normal maps further discussed below.

**Texel colors**

Changes in fragment color due to the application of a texture can be detected similarly to color differencing as described above. Texel values in both scenes have to be sampled uncolored, unlit and unshaded. It is desirable to disregard material properties because such properties, depending on selected blending parameters, could attenuate the rendering and therefore skew the results of differencing. Equally, any scene lighting could cause banding artefacts in areas where there are triangulation disparities. It is also desirable to consider all fragment changes including variations in the alpha channel as many texels rely on transparency for various visual effects. For instance, since OpenGL® 3.0 both texture and frame buffers support sRGB color space. This is a non-linear color representation with more bits allocated to darker colors where the human perception is more sensitive.

Despite this, the alpha channel is always linear and usually the color values are supplied pre-multiplied as:

$$t^{sRGB} = (\alpha, R, G, B),$$

$$R = (\alpha r)^{1/\gamma}, G = (\alpha g)^{1/\gamma}, B = (\alpha b)^{1/\gamma}, \tag{8}$$

where $\alpha$ is the opacity, *r,g,b* and are individual red, green and blue color values and $\gamma$=2.2 is a typical gamma correction. Therefore, to perform linear differencing on sRGB textures, each color channel needs to be raised to $\gamma$ and divided by $\alpha$, c.f. (Nguyen, H. 2007. GpuGems 3, First ed. Addison-WesleyProfessional, which document is hereby incorporated by reference). Thus, just like with diffuse colors, the corresponding texels can be normalized and their difference established as:

$$\Delta T_{AB}^{sRBG} = \left\| \left( \alpha_A, \frac{R_A^\gamma}{\alpha_A}, \frac{G_A^\gamma}{\alpha_A}, \frac{B_A^\gamma}{\alpha_A} \right) - \left( \alpha_B, \frac{R_B^\gamma}{\alpha_B}, \frac{G_B^\gamma}{\alpha_B}, \frac{B_B^\gamma}{\alpha_B} \right) \right\| \tag{9}$$

Similar adjustments can be performed for other representations, e.g. AdobeRGB, and other color spaces as described above.

**UV mapping**

UV mapping is the process of parametrizing the input image in a new coordinate system so that it can be transferred and correctly visualized from the 2D in the 3D space. Parameters (u,v) denote the image-bound coordinate system. Per-fragment (u,v) coordinates are differenced in *A* and *B.* Here, (*u,v*) coordinates are assigned to R and G color components respectively. Similarly, UVW can be mapped onto the full RGB space

Inputs to common texture mapping applications are planar images with each side parametrized in the range [0,1]. However, the parameter space is not always two-dimensional only. One-dimensional textures (*u*) can be used for contouring or altitude bound colorization, three-dimensional textures (*u,v,w*) for objects that resemble carvings made out of solid materials such as wood or marble [Peachey, D. R. 1985. Solid texturing of complex surfaces. SIGGRAPH Comput. Graph. 19, 3 (July), 279-286], four-dimensional textures (*s,t,r,q*) for spot light effects [Segal,M., Korobkin, C., Vanwidenfelt, R., Foran, J., Andhaeberli, P. 1992. Fast shadows and lighting effects using texture mapping. In Proceedings of the 19th Annual Conference on Computer Graphics and Interactive Techniques. SIGGRAPH '92. ACM, New York, NY, USA, 249-252] etc. For ease of argument, only change detection in (*u,v*) coordinates is described below; other parameter spaces can be constructed in a similar way.

Unlike previous metrics, changes in texture mapping parameters are not influenced by scene appearance due to lighting, shading, etc. They are also not view dependent and do not require normalization or linearization. Hence, the differences in (*u,v*) coordinates can be easily determined as:

$$\Delta P_{AB} = \left\| (u_A, v_A) - (u_B, v_B) \right\|, \tag{10}$$

where *u* and *v* are texture mapping parameters in range [0,1].

**Semantic assignment**

Regardless of the chosen color space representation, a consistent semantic meaning is assigned to all $(t_A,t_B)$ corresponding pairs based on Eq. (3). Similarly, a consistent semantic meaning is assigned to all $(p_A,p_B)$ corresponding pairs. There, the $\varepsilon$ threshold is especially important as depending on the texture resolution and the mapping function, small fluctuations in the parameter vector might fall within the same texel and thus not cause any visual change within the scene.

**Normal Difference**

Further common non-geometric scene properties include *bump*, *normal* and *tangent* maps. The *normal* is simply a unit length vector that is perpendicular to a surface at a given point. From many classical rendering techniques, normal mapping is still one of the most widely used as it provides efficient way of simulating surface-level detail by computing accurate per-fragment lighting. Such normals can be specified using a 2D texture map that encodes unit-length normal vectors $\hat{n} = (n_i, n_j, n_k)$ across the surface of an object represented within individual RGB color channels, one per axis. Even though normal maps are defined similarly to textures, their effects on a 3D scene are quite different.

In an embodiment of the invention, per-fragment input normals in input scenes A and B are differenced and unmodified sections are suppressed in greyscale in the output whilst differences are highlighted in color. The invention can detect fine detail which is correctly distinguished from the underlying surface normals. A normal map can easily add a lot of visual detail in an otherwise planar model.

Normal maps could efficiently be compared as images directly in 2D. However, this would require having object correspondence to know which normal maps to compare. By using screen space differencing we have a correspondence assumption based on depth first before we start comparing their normal. Therefore, it is important to identify normal changes after they have been mapped to the objects as well as the mapping parameters described above.

**Spherical coordinates**

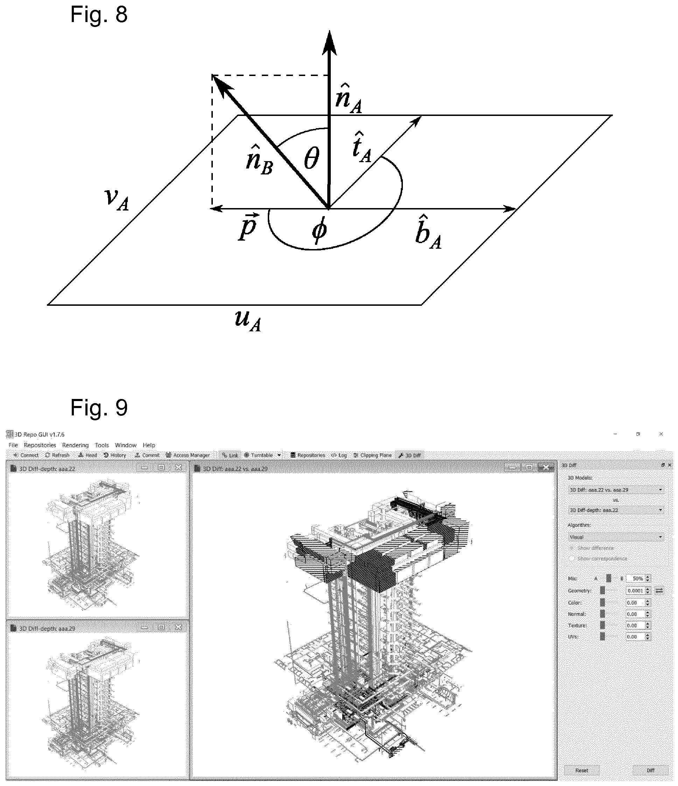

Figure 8 illustrates a system of spherical angles that can be used in an embodiment of the invention to express normals $\hat{n}_A$ and $n_B$. A difference between $\hat{n}_A$ and $\hat{n}_B$ can be expressed in terms of their relative inclination and azimuthal angles $\theta$ and Ø. Here, $\hat{n}_A \perp \hat{t}_A \perp \hat{b}_A$ are all orthogonal.

A simple Euclidean distance $\Delta N_{AB}$ defines only the length of the displacement vector from $\hat{n}_A$ to $\hat{n}_B$. This is proportional to their inclination angle $\theta$ but not their azimuthal angle Ø. Thus, it is possible to fix a local frame of reference based on the localized tangent space in scene *A* as shown in Figure 8. Since both normals are of unit length, their spherical angles can be expressed as:

$$\theta = \arccos(\hat{n}_A \cdot \hat{n}_B), \tag{11}$$

$$\emptyset = \arccos(\frac{\vec{p} \cdot \hat{t}_A}{\|\vec{p}\|}),$$

where $\hat{t}_A$ and $\hat{b}_A$ are *uv*-aligned tangent and bitangent vectors in scene *A,* and $\vec{p} = \hat{n}_B - \hat{n}_A(\hat{n}_A \cdot \hat{n}_B)$ is the projection of $\hat{n}_B$ into the ground plane defined by orthogonal vectors $\hat{t}_A \perp \hat{b}_A$.

To make differencing more efficient, we can identify edge cases. The projection of a unit normal $\hat{n}$ onto itself is equal to unit length as the angle between them is zero, i.e. $\hat{n}_A \cdot \hat{n}_B = 1$ when $\theta = 0°$. Conversely, the dot product of a normal with its inverted self at $\theta = 180°$ yields -1. By identifying these cases, we can avoid applying Eq. (11) where inverse trigonometric functions can be computationally expensive. Instead, we can directly identify the normal as unmodified or flipped, where the latter case is equally important as inverted or flipped normals are a frequent cause of lighting artefacts during rendering.

**Semantic assignment of normals**

Overall, we distinguish three basic types of normals in 3D modeling; i) per vertex, ii) per face and iii) per fragment normals. Regardless of their type, a consistent semantic meaning can be assigned to all $(\hat{n}_A, \hat{n}_B)$ corresponding ordered pairs as follows:

$$\Delta N_{AB} := \begin{cases} added, & if \ \hat{n}_A = \vec{0} \wedge \hat{n}_B \neq \vec{0} \\ deleted, & if \ \hat{n}_A \neq \vec{0} \wedge \hat{n}_B = \vec{0} \\ flipped, & if \ (\hat{n}_A \cdot \hat{n}_B) = -1 \\ modified, & if \ (\hat{n}_A \cdot \hat{n}_B) \neq -1 \\ unmodified, & otherwise \end{cases} \tag{12}$$

where $\vec{0}$ signifies an undefined or zero vector.

However, this approach is not applicable to more advanced techniques such as displacement maps as those, even though usually being specified in 2D texture maps, would modify the actual geometry and not just the normals. Hence, changes caused by displacement maps would have to be identified as geometric differences using depth buffers.

**Metadata Difference**

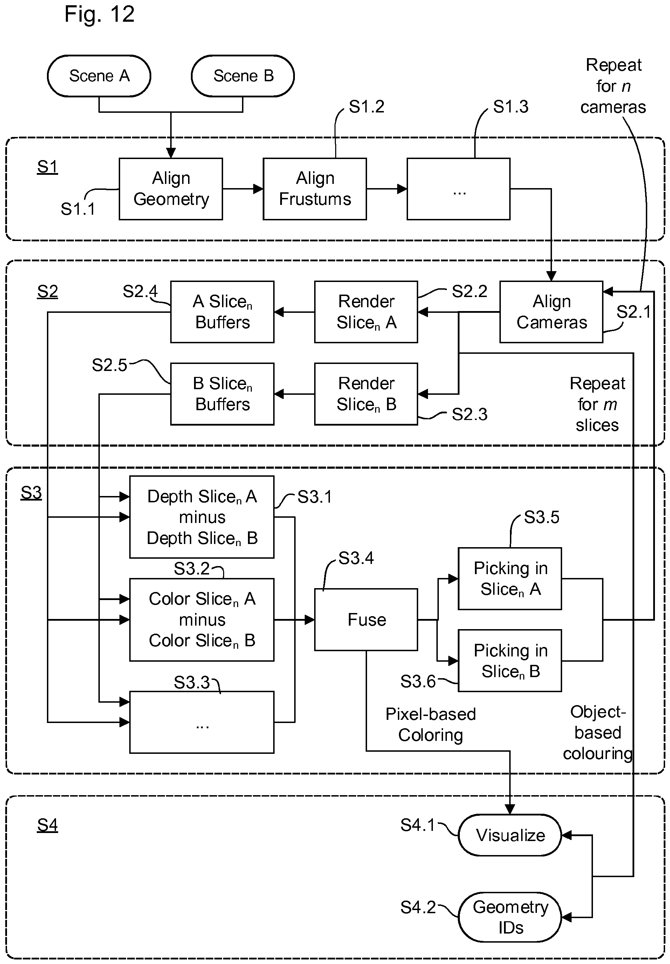

Another example of non-geometric scene properties which are specific to many 3D formats are metadata, i.e. additional contextual information attached to individual objects or certain locations. For example, COLLADA defines metadata via asset, contributor and COLLADA elements; Filmbox (FBX) via FbxProperty class; Industry Foundation Classes (IFC) via IfcPropertySet, IfcComplexProperty and IfcPropertySingleValue; etc. Such information is usually represented as text-based entries either in lines, paragraphs or key-value pairs. Especially in engineering, there can be many changes in model specifications that have no actual manifestation in 3D. Yet, users often require a visual representation of the affected areas. Sophisticated AEC tools such as Solibri Model Checker, for instance, let users create custom rule sets in order to display clashes and deficiencies as color-coded objects. In the same way, the present invention can highlight all areas where metadata changes have occurred. An example of metadata encoding is depicted in Figure 12. Adler-32 checksums are used to encode and compare metadata across scenes *A* and *B*. Unmodified entries are visualized in greyscale.

The original *Diff* algorithm (Hunt, J. W. and McIlroy, M. D. 1975. An algorithm for differential file comparison computer science. Tech. rep) finds a common subsequence, i.e. an edit distance, of two text files on a line-by-line basis. In *Screen Space 3D Diff* those metadata that have changed between input scenes *A and B* are found on a fragment-by-fragment basis instead.

**Metadata rendering**

Even though metadata by definition have no geometric appearance in 3D scenes, it is still possible to identify and difference matching text-based entries that are attached to scene objects via the screen space. Based on the implicit per-fragment correspondence as outlined above in relation to depth differencing, we perform metadata encoding and lookup in order to identify those metadata files that have been modified in some way. Hashing functions such as Message Digest 5 (MD5) (Rivest, R. L. 1991. Md5-newmessage-digest algorithm. Rump session of CRYPTO 91, which document is hereby incorporated by reference) and Secure Hash Algorithm 1 (SHA-1) (PUB, F. 2012. Secure hash standard (shs), which document is hereby incorporated by reference) provide straight-forward methods for detecting changes between files. A hash checksum provides a single numerical representation of contents of a file that can easily be compared for equality against each other. For the purposes of the present invention, speed of calculation of a hash is more important than security or minimizing the risk of collisions. Cryptographic salt or nonces should not be applied as these would result in incorrect indications of difference.

One way to identify which objects the rendered fragments belong to is to encode unique mesh identifiers as colors within a picking buffer. In the same way, it is possible to encode metadata checksums . Since most rendering APIs rely on 32-bit color outputs, the hashing checksum has to fit this size restriction. Adler-32 (Deutsch, P. and Gailly, J.-L. 1996. Zlib compressed data format specification version 3.3 Tech. rep., which document is incorporated by reference) is a suitable choice because it produces two concatenated 16-bit checksums. It also trades speed for accuracy which is important in real-time rendering. An alternative which can be used in an embodiment of the invention is to truncate a longer and more reliable hashing function such as the 128-bit MD5 in order to fit the buffer size. However, that also increases the probability of collisions and thus the likelihood of false positives. Nonetheless, such a metadata picking buffer can be used to identify high-level discrepancies between scenes *A and B* based on comparing individual fragments in the ($x,y$) screen space.

**Semantic assignment of metadata differences**

Regardless of the chosen hashing function, a consistent semantic meaning is assigned to all ($m_A, m_B$) corresponding pairs based on Eq. (3) with $\varepsilon$=0. Once the modified metadata nodes have been identified, we can then perform a standard line-by-line text-based differencing on corresponding entries as shown in Table 1. There, Adler-32 checksums for key-value groups in *A* and *B* are efe0c1f3 and ebc8cla9 respectively. Depending on the implementation, such line-by-line text differencing can be performed on-demand whenever the user selects a specific 3D object only in order to ensure real-time performance.

Table 1: Metadata difference. Matching key-value pairs for $m_A$ and $m_B$ are differenced on a per-line basis for *A* and *B*. *Italic* depicts deletions while bold depicts additions.

| Key | Value A | Value B |
|---|---|---|
| IFC Type | IfcBuildingElementProxy | IfcBuildingElementProxy |
| IFC GUID | *2g$e9LbAdvIfhCV88OrRtS* | **0N5rliG1FvJA2f_YsyJfk**M |
| LayerName | *A-0253-M_Step53* | **A-0248-M_Step48** |
| Floor | RF Roof | RF Roof |
| RequiredForCOBieCompone nt | TRUE | TRUE |
| AppearsIn | *37 Sets* | **129 Sets** |

(continued)

| Key | Value A | Value B |
|---|---|---|
| BrickName | Plate *4X12* | Plate **4X6** |
| Category | SYSTEM: PLATES | SYSTEM: PLATES |
| ColourFamily | White | White |
| ColourType | Solid | Solid |
| DesignID | *3029* | **3032** |
| ElementID | *4168072* | **303201** |
| ExactColour | WHITE | WHITE |
| InsructionPage | *123* | 118 |
| IntroducedIn | *2002* | 1992 |
| OrderReplacementPart | http://brickset.com/parts/*41680* 72 | http://brickset.com/parts/**3032 01** |
| Phase | Phase *110* | Phase **105** |
| RGB | #F4F4F4 | #F4F4F4 |
| AssetType | Movable | Movable |
| Renovation Status | New | New |

## Implementation

Having described the fundamental principles behind the *Screen Space 3D Diff* method, an example of a specific exemplary implementation will now be described. This implementation is applicable in day-to-day artistic and engineering work and is capable of dealing with large scenes.

## 3D Differencing

The *Screen Space 3D Diff* method has been designed in such a way that each per-pixel calculation is independent of all others. This makes it extremely suitable for parallelization. In addition, the *Screen Space 3D Diff* method makes no assumptions about the underlying geometry so that it is also suitable for rendering of large-scale 3D models using optimization techniques such as mesh batching. Overall, the present embodiment performs three separate render passes. The first two render passes are to obtain individual rendering metrics from input scenes *A* and *B.* The third render pass then processes these metrics as inputs in order to calculate the final differenced rendering on the screen. Although this calculation can be performed as a sequential computation in a single loop on a CPU, it is much more efficient to process it in parallel either within a fragment or a compute shader on a GPU.

## Algorithm

All rendering settings including viewing frustums and camera navigation need to be fixed in both *A* and *B.* Either of the scenes can be treated as a primary source of camera position as long as both are synchronized. In addition, both scenes need to be rendered at the same resolution which will also determine the resolution of the final result. If the scenes are not rendered at the same resolution, one will have to be interpolated or downsized to match the other which might affect the quality of differencing. Due to the asynchronous nature of user input in most real-time applications, all signal processing should be blocked via mutex while obtaining input metrics in the first two render passes. These metrics are then passed via bound texture buffers into the final render pass for processing. This is where the actual differencing on a per-pixel basis starts.

Firstly, depth values are linearized according to Eq. (5) if in perspective projection or left unmodified if in orthographic projection. These are then subtracted and thresholded against a small $\varepsilon$ as there is always a limited numerical precision in any depth buffer. Empirically, we have determined 0.0001 to be a suitable value for most models. The pixel is then assigned as belonging to either one of A and B, or both AB simultaneously. This is determined based on the depth in *A* being smaller, greater or equal to the corresponding depth in *B.* Those pixels that fall into either the A or B categories are then marked as deleted and added respectively. The remaining pixels that fall into the AB category are further processed for differences in additional metrics. These include detection of changes in color, texture, UV and normal values. Each of these is sampled on its own without influence of any other metrics or rendering parameters. Once all the metrics have been processed, custom color coding can be applied in order to convey the detected differences to the user. It is possible for the same pixel of the differenced image to carry changes in multiple metrics and so it is desirable that the resulting visualization caters for such a case. Finally, the mutex can be released and the process repeated for a new frame in real time.

We outline the pseudo-code for the algorithm in Table 2 below. We run differences on a metric, m, out of a set of all metrics $\mathcal{M}$. Where we use provided functions:

- depthBuffer - Returns the depth buffer for a particular scene
- render - Renders the scene for a particular metric
- threshold - returns a semantic meaning based on the type of metric as described above
- visualize - renders an image based on a matrix of semantic meaning values

We also use a set of pre-defined variables: $S_A$, represents a scene to be rendered; $\varepsilon_m$, represents a threshold for a particular metric, m. The function diff can be accelerated by using a GPU as the double loop can be run entirely in parallel. Therefore, the pseudo-code applies equally to both the GPU and CPU versions.

Table 2 - Pseudo code

```
proc diff(a,b,k,ε):
        for r := 1 to k.height step 1 do
            for c := 1 to k.width step 1 do
                    if k(r,c) = ∅ then
                            t := a(r,c) - b(r,c)
                            Δ := sqrt(dot(t, t))
                            o(r,c) := threshold(Δ,ε)
                    fi
                od
        od

        return o
end
begin
        φ := {∅ | n ∈ ℕ, n < width * height}
        DA := depthBuffer(SA)
        DB := depthBuffer(SB)
        φ := diff(DA,DB,φ,εD)
        for m := 1 to #M step 1 do
                MA := render(SB,m)
                MB := render(SA,m)
                φ := diff(MA,MB,φ,εm)
        od
        visualize(φ)
end
```

**Correspondence Lookup**

Apart from diffuse colors as discussed above, standard shading models also define additional material properties such as ambient, specular and emissive colors as well as separate levels of shininess, opacity, etc. Similarly, physically based rendering (PBR) defines base color, albedo, roughness, metallicity, reflectance, and so on. Following the example of diffuse color, a simple approach would be to uniformly write each such parameter into its own buffer and compare those on a pair-wise basis.

However, in real-time rendering it is far more economical to rely on the implicit per-pixel correspondence between the rendered scenes to be compared. Instead of relying on direct screen space color sampling, it is possible to use the matching screen space ($x,y$) coordinates as a source of supposed correspondence in order to look-up values associated with a specific location. This can be utilized for determining changes in a myriad of associated scene properties including transparency, and other material settings to achieve view independence and to speed up the processing. Instead of writing each material component individually into a dedicated screen space buffer, it is much faster to "pick" the material corresponding to each fragment, i.e. a pixel representation of a mesh in the screen space, via a picking buffer and then compare them property-by-property on a pair-wise basis. As there tend to be many more meshes than materials in most 3D scenes, further early reject optimizations on already visited material pairs via a look-up table can speed up the differencing. In other words, if a difference is detected in one property, checking subsequent properties is skipped. Such a table can be represented in CPU as well as GPU. In doing so, any multi-dimensional metrics can be compared just like diffuse colors, while single value properties can be subtracted to form signed differences in order to not only find the amount of change but also the trend, i.e. an increase or decrease. The same approach can be also applied to shader-based parameter comparisons just as to metadata differencing.

**Transparency**

The same lookup approach is also important for materials and textures with alpha channel, i.e. transparency. Faces in the background might inadvertently contribute color changes to semi-transparent faces in the foreground. In such a case, it would not be possible to determine which of them was the primary cause of change. In real-time rendering, a common approach is to segregate all objects with transparency into a separate render pass. However, this still does not prevent the appearance of objects from being view dependent as shifts in the camera position have direct effect on the occlusion and therefore color readings in the screen space. Thus, any alpha values are desirably differenced based on fragment correspondence and material or texture look-up rather than on direct screen space readings to isolate them rather than using a separate render pass which would be computationally more intensive and which would still not guarantee segregation of the foreground from the background.

**Visualization**

A computer program capable of executing on a desktop computer and implementing the *Screen Space 3D Diff* method employs a graphical user interface depicted in Figure 9. Input scenes *A and B* are on the left while the differenced combined result is on the right. Geometric additions and deletions are displayed with 50% opacity which can be set using a slider. The exemplary model shown is courtesy of Grontmij and Canary Wharf Contractors.

The computer program can be implemented as an extension to the open source 3D Repo GUI application written in C++ and cross-platform UI framework Qt. File-format independent 3D data handling uses the Open Asset Import Library (ASSIMP) which enables loading and comparing over 40 common 3D file formats including COLLADA™, FBX, IFC, OBJ, STL, PLY, 3ds Max, Blend, etc. For enhanced compatibility, OpenGL® ES rendering is achieved using the GLC library.

Figure 9 depicts the main user interface. By default, the two input scenes *A* and *B* are displayed as smaller windows on the left-hand side while the combined differenced result is on the right in a larger main window. In an embodiment, a user may select which windows to display as well as their positions and sizes. Aspect ratios as well as user navigation can be automatically synchronized across all three windows to ensure that the same portions of the scene are visible at all times. In an embodiment, changes are not highlighted in the input scenes in order to preserve the originals for visual inspection. Instead, the combined result is color-coded, for example using green for added, red for deleted and greyscale for unmodified. Other color-combinations or ways of identifying changes are also possible. Changes could have a different brightness, blink, or gradually transition between inputs A and B. An opacity slider is optionally provided to enable the user to mix *A and B* inputs resulting in a semi-transparent rendering. The opacity slider can be positioned to a more-red side, with only *A* visible at one extreme, and to a more-green side, with only *B* visible at the other extreme. In an embodiment, one or more additional sliders - e.g. for one or more of color, texture, UVs and normal - can be provided to allow the user to control the relevant ε threshold in Eq. (3) for the respective metric. With ε set to infinity, the individual metric is disabled giving the user an ability to control and reveal only those changes that are relevant to their specific use case. In addition, a user can maximize the main diff window in order to hide the input scenes altogether. Similarly, the user is able to display and customize differences also for point and line renderings as shown in Figure 1.

**Results**

Figure 1 demonstrates that the *Screen Space 3D Diff* method is independent of any specific rendering technique and works equally well on points, lines and polygons. Especially in Figure 1 (c) and (d), it can be noted that not only object-level changes but also all changes in the underlying triangulation are correctly identified and highlighted as desired. Furthermore, all changes in the models were identified correctly.

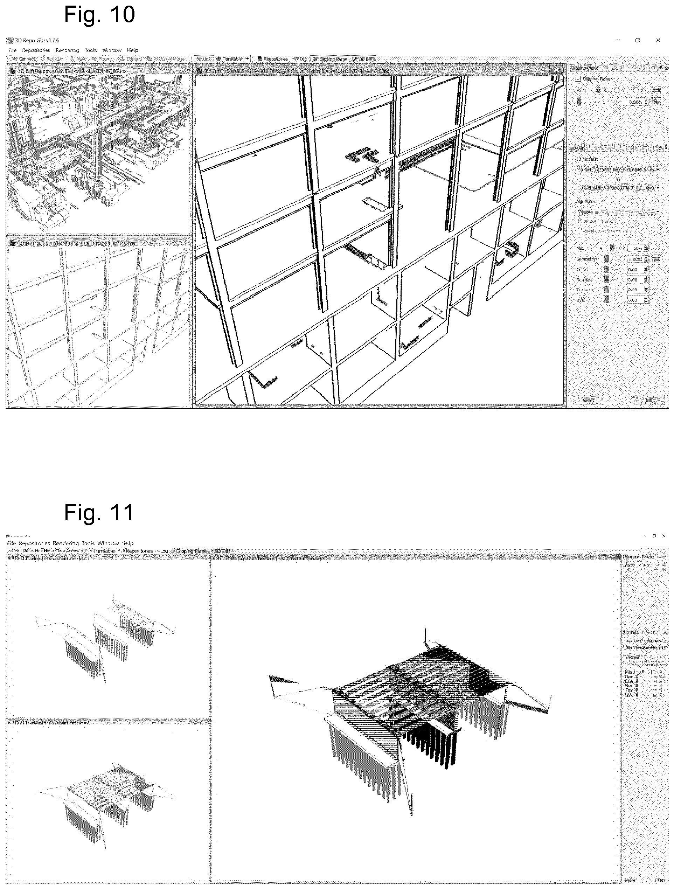

Similarly, Figure 9 shows revisions of a mechanical, electrical and plumbing (MEP) model of a multi-story building that has been changed over several weeks of engineering design work. As well as detecting differences between similar models or scenes, the method of the invention can be adapted to detect clashes between models that ought to be separate. Overlapping surfaces can be detected as an inverse of differences. In Figure 10, mechanical (top left) and structural (bottom left) models of the same building are examined for design clashes highlighted in hatched grey (right). Despite a large number of components and polygons, the method of the present invention operates in real-time with minimal overhead making the resulting visualization highly interactive. This in itself already provides a massive advantage to industrial professionals as they can now visualize all changes over multiple revisions and prolonged periods of design time quickly and reliably. Even though the method of the present invention cannot be used to directly determine whether two parts of the same model intersect, it can still be useful when comparing two different models such as those shown in Figure 4. An inverse of the differencing calculation highlights not the changes but rather commonalities, i.e. areas where they are the same. This can be considered a simple way of detecting clashes in real time, a very popular technique for design coordination in AEC.

Another industrial example of revisions of the same model with a large number of components is shown in Figure 11. This depicts various design changes on a highway bridge with over 18 k components and 9 m polygons (model courtesy of Costain and Highways England) being correctly calculated and visualized in real-time.

Discussion

An embodiment of the invention uses depth as a first measure, as it describes whether or not an object itself has been altered, added or removed. The core premise of *Screen Space 3D Diff* assumes that if a co-located $(x,y)$ position in image space across two co-aligned 3D scenes renders the same, no difference can be reliably detected from this information alone. Thus, it can be concluded that the two scenes at this location from this specific viewpoint are *seemingly* identical.

However, if the location represents different values on at least one of its underlying screen space metrics such as *depth*, *color*, *normal*, etc., then it can be definitely concluded that a change has been detected. After all, the same static model being rendered under the exact same conditions must, by definition, yield the exact same rendering each time, otherwise the renderer must have been nondeterministic or altered. In this respect, the choice of the underlying rendering modalities is crucial as it has a direct effect on the calculated difference and thus also on the result presented to the end user. For instance, if the user is only interested in geometric changes, they would not necessarily want or need to see the differences in color or texture space and vice versa. Hence, the specific combination of modalities needs to match users' expectation of equality and discrepancy in relation to 3D models.

One of the main insights is that in order to present plausibly looking results for the end user, it is not necessary to calculate all changes in the entire scene. Instead, it is sufficient to find only those changes that are currently visible. To enable the process to be interactive, it is desirable to maintain the alignment of the two models as the user manipulates the view. In other words, the method of the invention performs synchronized rendering of the two models. The user can explore the model and find differences that are not visible in an initial view by changing the selected view point.

As shown in Figure 3, for two scenes under the same projection and camera settings, a number of independent renderings in the screen space are generated which are then differenced in order to obtain the final result. Differencing in depth, color, texture and normal spaces have been discussed above, however, the present invention can be extended to any other screen space parameters.

By calculating differences in the image space, the present invention avoids the need for computationally expensive correspondence estimation which might lead to errors or omissions. In the invention, pre-alignment of the input models and their subsequent comparison based on the same screen space co-locations defines a quasi-correspondence that is sufficient for the purpose of the invention. Nevertheless, it is important to note that this approach does not directly replace actual object-level differencing in the world space. Despite this, the method of the present invention is still able to detect object IDs based on picking buffer lookup in the current frame. It also provides a faster approach to fragment-based differencing in real time.

Since this method operates in the screen space and is thus fully independent of the scene complexity, its computational overhead is dependent only on the number of pixels in the desired output. This means that the computational load of the present invention scales linearly with the screen size. Overall, the complexity of the computation is $O(n)$ per metric, where n is the number of rendered pixels in the screen space.

By design, *Screen Space 3D Diff* finds all differences between two input scenes down to every pixel regardless of their file format or modeling tool they have been designed in. Once the relative scale of the 3D model to its actual dimensions in real world is known, the threshold for detecting differences can then represent the absolute size of the smallest possible change that is desired to be detected. In other words, a unit-less threshold can be translated into meaningful distance measure in millimeters, centimeters and so on in real world, which is particularly useful for CAD applications in aerospace or automotive industries, for example.

The present invention avoids the need for computationally expensive correspondence estimation that would be prohibitive for any real-time rendering. In addition, it provides pixel-level accuracy for any rendered camera view by calculating only the differences in the currently visible space rather than the whole scene.

In a variation of the above embodiments of the present invention, an automated method of detection of all differences between two scenes is provided. The variation is capable of identifying differences to a certain minimal size without the need for user input. To achieve this, instead of rendering a single frame from a single virtual camera, the variation renders the scenes from multiple virtual cameras. Furthermore, for each of the cameras, multiple front to back clipping plane slices are produced in order to reveal objects that might be hidden or otherwise occluded. This trades computational complexity for automation. Depending on model complexity and available computing resource, the variant may be performed off-line, rather than in real time. The real-time based method can be considered a trivial case of the automated variation where the numbers of different slices $m$ and camera views $n$ are each equal to one.

In an embodiment of the invention, the same scene is rendered from four different camera locations forming corners of a regular tetrahedron in order to unveil all possible surface planes that otherwise might have been perpendicular and therefore invisible to some of the cameras.

### 8.1 Limitations

Despite obvious advantages of the method of the present invention such as real-time performance, ease of implementation and massive scalability, it still suffers from several limitations listed below. With these, we also present a number of suggestions that might help to mitigate some of these shortcomings in the future.

**Object-level correspondence.** Even a simple editing operation such as repositioning the same object can be highlighted as deletion in *A* and addition in *B.* This is because the method of the present invention alone has no notion of object-level correspondence. Nonetheless, industrial professionals still value these results because they highlight changes in complex scenes. Once identified, it is then easy for the users to further assign plausible explanation for the visualizations. Based on the picking buffer object identification described above, it is even possible to automatically assign individual objects from the world space to the detected screen space differences. If the input scenes share the same object IDs, it would be easy to separate the modifications from actual additions and deletions. In that case, however, it would be also possible to exhaustively discover all changes without the need for screen space comparison in the first place. Should the input scenes not share the same IDs, e.g. due to incompatible file formats or authoring tools, it would still be possible to assign geometry descriptors to each mesh in the scene. These descriptors could then be compared for equality in order to offer a more plausible explanation for all changes.

**Spatial co-location.** Although in general any unrelated models can be compared using the method of the present invention, the most meaningful results are always produced from revisions of the same scene where some parts have been left unmodified to anchor the meaning in some way. However, sometimes overlapping surfaces of different objects register as unmodified. This is technically correct as based on what is visible, those surfaces indeed occupy the same space in world coordinates. However, the users might be left perplexed should they expect some higher semantic explanation of the changes. The method of the present invention can be combined with one or more cost metrics that would favor more plausible semantic explanation of the detected changes based on pre-defined heuristics with or without object-level correspondence.

**Occlusion.** A limitation of the above embodiment is that it cannot reveal changes behind currently visible surfaces. Especially in CAD-related scenarios as shown in Figure 9, where there are thousands of overlapping components, it is up to the user to manually examine the entire scene in order to visually discover the changes. However, they might never be satisfied that they have visited all objects from all angles. Even if the application kept a list of already rendered faces, there is no guarantee that all changes were visible as some of them might be too small to register as a pixel in the screen space due to quantization.

Therefore, another embodiment of the present invention provides a highly-scalable method that can automatically detect all changes across the entire scene and not just the visible surfaces in order to unveil any occluded objects. An exhaustive list of changes akin to existing AEC solutions such as Solibri Model Checker can then be generated.

This method is depicted in Figure 12 in which parts that are the same as in Figure 2 are depicted with the same references. The major difference from the method of Figure 2 is that rather than render an external view of the scenes or objects, a virtual 'slice' through the objects or scenes is rendered. The process is repeated for multiple slices and multiple view points (virtual cameras) to ensure thorough explanation of the objects or scenes.

An apparatus according to an embodiment of the present invention comprises a client device 10 which includes a central processing unit 11 connected to a storage device 12, input device such as a keyboard 13 and a display 14. Models and/or scenes to be processed in the invention can be retrieved from the storage device 12 or obtained from another source, e.g. via the internet 20. The central processing unit 11 may include a graphic processing unit GPU in order to perform parallel calculations optimally.

The outputs of the present invention may be stored in the storage device 12, displayed to the user, or transmitted to another computer. In an embodiment of the invention, some or all of the steps of the method can be carried out on a remote server 21 connected to the client computer 10 via a network 20, such as the internet.

## Conclusion

The process of 3D rendering encompasses many disparate inputs and layers that together produce the final image in the screen space. These include not only the geometry but also materials, lights, normals, textures, environmental effects and so on. In order to achieve meaningful results when differencing 3D scenes, each of these constituents needs to be isolated and compared individually. The present invention provides a method for fast and reliable discovery of multi-metric changes between two input models. Unlike previous academic as well as industrial solutions, the method of the present invention does not require any computationally expensive correspondence estimation and is independent of both scene complexity and data representations. This makes it extremely suitable for real-time implementation. Due to these crucial characteristics, it presents a uniquely compelling solution for the CAD industry where there are often very large and complex scenes generated by a myriad of modeling tools and processes.

The invention has been described above in relation to specific embodiments however the reader will appreciate that the invention is not so limited and can be embodied in different ways. For example, the invention can be implemented on a general-purpose computer but is particularly effective when implemented using highly-parallel processors such as GPUs. The invention can be implemented on a standalone computer, e.g. a personal computer or workstation, a mobile phone or a tablet, or in a client-server environment as a hosted application. Multiple computers can be used to perform different steps of the method rather than all steps being carried out on a single computer. Output of the method of the invention can be displayed on any convenient display, printed to physical media, or stored in electronic form in any convenient file structure. A computer program embodying the invention can be a standalone software program, an update or extension to an existing program, or a callable function in a function library. The invention should not be limited except by the appended claims.

REFERENCES

[Non-Patent Reference 1] CALLAHAN, S. P., FREIRE, J., SANTOS, E., SCHEIDEGGER, C. E., SILVA, C. T., AND VO, H.T. 2006. Vistrails: Visualization meets data management. In Proceedings of the 2006 ACM SIGMOD International Conference on Management of Data. SIGMOD '06. ACM, New York, NY, USA, 745-747.

[Non-Patent Reference 2] DOBOŠ, J., MITRA, N.J., AND STEED, A. 2014. 3d timeline: Reverse engineering of a part-based provenance from consecutive 3d models. Comput. Graph. Forum 33, 2 (May), 135-144.

[Non-Patent Reference 3] DOBOŠ, J. 2015. Management and visualisation of non-linear history of polygonal 3d models, Ph.D. thesis, University College London.

[Non-Patent Reference 4] DENNING, J. AND PELLACINI, f. 2013. Meshgit: Diffing and merging meshes for polygonal modelling. ACM Trans. Graph. 32, 4 (July), 35:1-35:10.

[Non-Patent Reference 5] DOBOŠ, J. AND STEED, A. 2012b. 3d diff: an interactive approach to mesh differencing and conflict resolultion. In SIGGRAPH Asia 2012 Technial Briefs, SA'12. ACM, New York, NY, USA, 20:1-20:4.

[Non-Patent Reference 6] JAIN, A., THORMÄHLEN, T., RITSCHEL, T., AND SEIDEL, H.-P. 2012. Exploring shape variations by 3d-model decomposition and part-based recombination. Comp. Graph. Forum (Proc. Eurographics 2012) 31, 2.

[Non-Patent Reference 7] DOBOŠ, J. AND STEED, A. 2012c. 3d revision control framework. In Proceedings of the 17th International Conference on 3D Web Technology. Web3D '12. ACM, New York, NY, USA, 121-129.

[Non-Patent Reference 8] KRIVOKUCA, M., WÜNSCHE, B. C., AND ABDULLA, W. 2012. A new error metric for geometic shape distortion using depth values from orthographic projections. In Proceedings of the 27th Conference on Image nd Vision Computting New Zealand. IVCNZ '12. ACM, New York, NY, USA, 388-393.

## Claims

1. A method of detecting differences between a first 3D scene and a second 3D scene, the method comprising:

   aligning the first and second 3D scenes to each other;
   determining a set of view settings;

rendering first and second source images of the first and second 3D scenes respectively using the view settings, each of the source images comprising a 2D array of pixels and each of the pixels comprising a display value and an auxiliary value;

comparing the auxiliary values of corresponding pixels of the first and second source images to detect differences between the first and second 3D scenes.

2. A method according to claim 1 wherein the view settings include a virtual viewpoint and the auxiliary value comprises a depth value relative to the virtual viewpoint.

3. A method according to claim 2 wherein the depth value is linearized.

4. A method according to claim 1, 2 or 3 wherein each of the pixels of the source images has at least one additional auxiliary value and the method further comprises comparing the display values and/or additional auxiliary values of corresponding pixels of the first and second source images to detect differences between the first and second 3D scenes.

5. A method according to claim 4 wherein comparing additional auxiliary values is only performed for pixels that are not detected as different by comparing the auxiliary values.

6. A method according to claims 4 or 5 wherein the additional auxiliary values include at least one of: color, normal, texture, UV, and metadata of an object located at the pixel

7. A method according to claim 6 wherein the additional auxiliary values includes metadata and the step of comparing additional auxiliary values comprises comparing a hash of the metadata.

8. A method according to claim 5 or 6 wherein the display value and/or the additional auxiliary value comprises a multi-dimensional value and the step of comparing the display values and/or additional auxiliary values of corresponding pixels comprises calculating a distance metric between the display values and/or additional auxiliary values of corresponding pixels.

9. A method according to claim 8 further comprising transforming the display values into a linear color space before the step of comparing the display values.

10. A method according to any one of the preceding claims wherein the view settings include at least one of a view point, an orientation, a direction, a resolution, a field of view, an aspect ratio of the viewport, a minimum viewing distance and a maximum viewing distance.

11. A method according to any one of the preceding claims wherein the step of determining a set of view settings comprises receiving a user input of at least one view setting.

12. A method according to any one of the preceding claims wherein comparing the auxiliary values comprises determining whether the difference between the auxiliary values is greater than a threshold, e.g. a threshold set by a user.

13. A method according to any one of the preceding claims further comprising the step of determining a different set of view settings and repeating the steps of rendering and comparing.

14. A computer program comprising instructions that, when executed by a computer system, cause the computer system to effect a method according to any one of the preceding claims.

15. A computer system comprising a central processing unit, a graphic processing unit and memory, the memory storing a computer program according to claim 14, wherein the steps of rendering and comparing are performed by the graphic processing unit.

Fig. 1

(a)   (b)   (c)   (d)   (e)

## Fig. 2

Fig. 3

Fig. 4

(a)                                                    (b)

Fig. 5

## Fig. 6

## Fig. 7

(a)

(b)

(c)

(d)

Fig. 8

Fig. 9

Fig. 10

Fig. 11

## Fig. 12

Fig. 13

Europäisches
Patentamt

European
Patent Office

Office européen
des brevets

**EUROPEAN SEARCH REPORT**

Application Number

EP 17 15 3788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MAJA KRIVOKUCA ET AL: "A new error metric for geometric shape distortion using depth values from orthographic projections", IMAGE AND VISION COMPUTING NEW ZEALAND, ACM, 2 PENN PLAZA, SUITE 701 NEW YORK NY 10121-0701 USA, 26 November 2012 (2012-11-26), pages 388-393, XP058030015, DOI: 10.1145/2425836.2425911 ISBN: 978-1-4503-1473-2 * figures 1-5, 7-9 * * abstract * * Chapter: 3. THE DEPTH DIFFERENCE (DD) METRIC; page 389 - page 390 * * Chapter: 4. IMPLEMENTATION DETAILS; page 390 * * chapters: 6. RESULTS AND DISCUSSION-7. CONCLUSION; page 392 - page 393 * | 1-15 | INV. G06T19/00 G06T7/00 |
| X | ----- SVENJA KAHN: "Reducing the gap between Augmented Reality and 3D modeling with real-time depth imaging", VIRTUAL REALITY, vol. 17, no. 2, 23 December 2011 (2011-12-23), pages 111-123, XP055244589, GB ISSN: 1359-4338, DOI: 10.1007/s10055-011-0203-0 * figures 2-4 * * abstract * * Chapter: 4 Geometric difference detection; page 114 - page 116 * ----- -/-- | 1-15 | TECHNICAL FIELDS SEARCHED (IPC) G06T G06K |

The present search report has been drawn up for all claims

| Place of search | Date of completion of the search | Examiner |
|---|---|---|
| Berlin | 26 July 2017 | Höller, Helmut |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 17 15 3788

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/254499 A1 (PANG GUAN [US] ET AL) 10 September 2015 (2015-09-10) <br> * figures 6-12 * <br> * paragraph [0005] - paragraph [0007] * <br> * paragraph [0017] - paragraph [0019] * <br> * paragraph [0048] - paragraph [0069] * <br> * paragraph [0075] * <br> ----- | 1-15 | |
| A | IN KYU PARK ET AL: "Efficient Measurement of Shape Dissimilarity Between 3D Models Using Z-Buffer and Surface Roving Method", EURASIP JOURNAL ON APPLIED SIGNAL PROCESSING, vol. 10, 1 January 2002 (2002-01-01), pages 1127-1134, XP055393665, <br> * the whole document * <br> ----- | 1-15 | |
| A | JP 2002 046087 A (MITSUBISHI HEAVY IND LTD) 12 February 2002 (2002-02-12) <br> * figures 1, 2, 5 * <br> * abstract * <br> * paragraphs [0021], [0031] * <br> ----- | 1-15 | |
| A | EP 1 519 318 A1 (FUJITSU LTD [JP]) 30 March 2005 (2005-03-30) <br> * figures 1-10, 18 * <br> * paragraph [0001] - paragraph [0017] * <br> * paragraph [0024] - paragraph [0160] * <br> ----- | 1-15 | TECHNICAL FIELDS SEARCHED (IPC) |
| A | TANGELDER J W H ET AL: "A survey of content based 3D shape retrieval methods", SHAPE MODELING APPLICATIONS, 2004. PROCEEDINGS GENOVA, ITALY 7-9 JUNE 2004, PISCATAWAY, NJ, USA,IEEE, 7 June 2004 (2004-06-07), pages 145-388, XP010709301, DOI: 10.1109/SMI.2004.1314502 ISBN: 978-0-7695-2075-9 <br> * the whole document * <br> ----- | 1 | |

The present search report has been drawn up for all claims

| Place of search | Date of completion of the search | Examiner |
|---|---|---|
| Berlin | 26 July 2017 | Höller, Helmut |

EPO FORM 1503 03.82 (P04C01)

page 2 of 2

## ANNEX TO THE EUROPEAN SEARCH REPORT
## ON EUROPEAN PATENT APPLICATION NO.

EP 17 15 3788

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2017

| Patent document cited in search report | | Publication date | Patent family member(s) | | Publication date |
|---|---|---|---|---|---|
| US 2015254499 | A1 | 10-09-2015 | NONE | | |
| JP 2002046087 | A | 12-02-2002 | NONE | | |
| EP 1519318 | A1 | 30-03-2005 | CN | 1630886 A | 22-06-2005 |
| | | | EP | 1519318 A1 | 30-03-2005 |
| | | | JP | 4001600 B2 | 31-10-2007 |
| | | | JP | WO2004003850 A1 | 27-10-2005 |
| | | | KR | 20050010982 A | 28-01-2005 |
| | | | US | 2005068317 A1 | 31-03-2005 |
| | | | WO | 2004003850 A1 | 08-01-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AIGER, D. ; MITRA, N. J. ; COHEN-OR, D.** 4-points congruent sets for robust pairwise surface registration. *ACM Trans. Graph.,* 2008, vol. 27 (3

- **COZZI, P ; ANDRING, K.** 3D Engine Design for Virtual Globes. CRCPress, 2011

- **SCHANDA, J.** Colorimetry: understanding the CIE system. John Wiley & Sons, 2007

- **MCLAREN, K.** Xiii - the development of the CIE 1976 (L*a*b*) uniform color space and color-difference formula. *Journal of the Society of Dyers and Colourists,* 1976, vol. 92 (9), 338-341

- **SHARMA, G. ; WU, W. ; DALAL, E. N.** The CIEDE2000 color-difference formula: Implementation notes, supplementary test data, and mathematical observations. *Color Research & Application,* 2005, vol. 30 (1), 21-30

- **SHARMA, G. ; ANDBALA, R.** Digital color imaging handbook. CRC press, 2002

- **NGUYEN, H.** GpuGems. Addison-WesleyProfessional, 2007, vol. 3

- **PEACHEY, D. R.** Solid texturing of complex surfaces. *SIGGRAPH Comput. Graph.,* July 1985, vol. 19 (3), 279-286

- Fast shadows and lighting effects using texture mapping. **SEGAL,M. ; KOROBKIN, C. ; VANWIDENFELT, R. ; FORAN, J. ; ANDHAEBERLI, P.** Proceedings of the 19th Annual Conference on Computer Graphics and Interactive Techniques. SIGGRAPH '92. ACM, 1992, 249-252

- **HUNT, J. W. ; MCILROY, M. D.** An algorithm for differential file comparison computer science. *Tech. rep,* 1975

- **RIVEST, R. L.** Md5-newmessage-digest algorithm. *Rump session of CRYPTO 91,* 1991

- **DEUTSCH, P. ; GAILLY, J.-L.** Zlib compressed data format specification version 3.3. *Tech. rep.,* 1996

- Vistrails: Visualization meets data management. **CALLAHAN, S. P. ; FREIRE, J. ; SANTOS, E. ; SCHEIDEGGER, C. E. ; SILVA, C. T. ; AND VO, H.T.** Proceedings of the 2006 ACM SIGMOD International Conference on Management of Data. SIGMOD '06. ACM, 2006, 745-747

- **DOBOŠ, J. ; MITRA, N.J. ; STEED, A.** 3d timeline: Reverse engineering of a part-based provenance from consecutive 3d models. *Comput. Graph. Forum,* 2014, vol. 33 (2), 135-144

- Management and visualisation of non-linear history of polygonal 3d models. **DOBOŠ, J.** Ph.D. thesis. University College London, 2015

- **DENNING, J. ; PELLACINI.** Meshgit: Diffing and merging meshes for polygonal modelling. *ACM Trans. Graph.,* 04 July 2013, vol. 32 (4

- 3d diff: an interactive approach to mesh differencing and conflict resolultion. **DOBOŠ, J. ; STEED, A.** SIGGRAPH Asia 2012 Technial Briefs, SA'12. ACM, 2012

- **JAIN, A. ; THORMÄHLEN, T. ; RITSCHEL, T. ; SEIDEL, H.-P.** Exploring shape variations by 3d-model decomposition and part-based recombination. *Comp. Graph. Forum,* 2012, vol. 31, 2

- 3d revision control framework. **DOBOŠ, J. ; STEED, A.** Proceedings of the 17th International Conference on 3D Web Technology. Web3D '12. ACM, 2012, 121-129

- A new error metric for geometic shape distortion using depth values from orthographic projections. **KRIVOKUĆA, M. ; WÜNSCHE, B. C. ; ABDULLA, W.** Proceedings of the 27th Conference on Image nd Vision Computting New Zealand. IVCNZ '12. ACM, 2012, 388-393